# EUROPEAN PATENT SPECIFICATION

(11) **EP 2 969 481 B1**
(45) Date of publication and mention of the grant of the patent: **29.08.2018**
(21) Application number: 14709351.2
(22) Date of filing: 04.03.2014
(51) Int. Cl.: B29C 65/48, B29L 31/48, B32B 37/12

(54) **A METHOD OF MANUFACTURING A PADDED PART PRIMARILY FOR AN ITEM OF WEAR**
VERFAHREN ZUR HERSTELLUNG EINES GEPOLSTERTEN TEILS, HAUPTSÄCHLICH FÜR EIN KLEIDUNGSSTÜCK
PROCÉDÉ DE FABRICATION D'UNE PIÈCE REMBOURRÉE PRINCIPALEMENT POUR UNE PIÈCE D'HABILLEMENT

(30) Priority: 12.03.2013 GB 201304391
(43) Date of publication of application: 20.01.2016
(73) Proprietor: Stirling Moulded Composites Limited, Burnley, Lancashire BB12 7SN (GB)
(72) Inventor: TAYLOR, David Sterling, Burnley Lancashire BB12 7SN (GB)
(74) Representative: Bray, Lilian Janet
(86) International application number: PCT/GB2014/000077
(87) International publication number: WO 2014/140513

(56) References cited:
- WO-A1-2012/027792
- WO-A1-2013/026092
- CN-U- 201 733 870

## Description

The present invention relates to a method of manufacturing a padded part, primarily for use in an item of wear that may be, in particular but not exclusively, a load-bearing harness or belt.

WO2012/027792 describes a method of manufacturing a facemask in which a structural component thereof is thermoformed. Whilst the facemask incorporates a fastener, for example made of a hook and loop material, it does not describe the incorporation of a rigid fastener, for example made of metal or rigid plastic, into the component during the thermoforming process.

Load-bearing harnesses and belts have to be comfortable to wear and are therefore usually padded. To enable them to bear considerable loads, buckles, loops and the like may be stitched to these parts so that other items can be secured thereto. Manufacturing such items can be fiddly and time consuming as it is important that the items produced are of good quality and can withstand the rigours involved in the use to which the item will be put. Typically, such items are made by stuffing a padding material into a pre-sewn pocket, which is then closed and sewn through to provide thinner parts that act as hinges, which allow the item to flex. However, if the pocket is made from an impervious material such a manufacturing process traps air inside the item, which can expand in hot environments and burst the stitching.

Also, such items tend to allow water ingress in wet environments. Such items are therefore not suitable for use by, for example firemen, who work in hot and wet conditions

One object of the present invention is to provide a method of manufacturing a padded part for an item of wear such as, for example a harness or belt, that simplifies the manufacturing process and enables items to be produced that consistently meet the standards required and that overcome or substantially mitigate the aforementioned disadvantages.

Also, the stitching on parts used in harnesses and belts is usually carried out through the strap by machining using drop stitching. However, this practice creates a problem as chafing of the item against the wearer's clothing can cause the stitching to become worn to the extent that it may be worn through. The harness or belt is then no-longer fully weight-bearing and may become dangerous to use in a hazardous situation.

It is a further object of the present invention is to provide a method of manufacturing a padded part for an item of wear, such as for example a harness or belt, that overcomes or substantially mitigates the aforementioned problem.

According to the present invention there is provided a method of manufacturing a padded part for use in an item of wear comprising the steps of providing a first sheet of a flexible material; locating at least one fastener on one side of the first sheet; providing a second sheet of flexible material; creating a layered assembly in a mould tool, the layered assembly comprising, in order, the first sheet of material such that said one side of the first sheet is outermost, a piece of mouldable padding, and the second sheet of flexible material, hot melt adhesive layers being provided between the padding and the first and second sheets of flexible material; and moulding the layered assembly in a press after or during heating of the layered assembly thereby simultaneously to bond the layers of the assembly together and to mould the layered assembly into a predetermined shape thereby forming a moulded and pressed laminate ; characterised in that the mould tool is provided with at least one cavity in which said fastener or fasteners located on said one side of the first sheet are inserted whereby the fastener or fasteners are unaffected by the pressure exerted by the press.

Preferably, said at least one fastener is either secured to said one side of the first sheet prior to creation of the layered assembly and/or another fastener is secured to the first sheet of material when the layered assembly is moulded in the press.

Preferably also, the cavity is at least partially defined by a magnetic surface that assists in location of the fastener within the cavity.

The simultaneous bonding and moulding process considerably simplifies the manufacturing process and the use of a mould tool ensures consistency in the shape and size of the padded part produced.

The mouldable padding and hot melt adhesive layers may be preheated prior to creation of the layered assembly. In one method, the layered assembly is preheated prior to moulding in a press that is not heated. In another method, the layered assembly is moulded in a heated press. In a further method, the layered assembly is preheated prior to moulding in a press that is heated.

Preferably also, the fastener or fasteners are attached to the first sheet of material using a jig that facilitates their alignment relative to the first sheet of material.

Preferably also, a reinforcement is the provided on the other side of the first sheet of flexible material opposite said one side of the first sheet of flexible material. Advantageously, the fasteners are simultaneously attached to both the first sheet of material and to the reinforcement, for example by stitching using the jig, prior to creation of the layered assembly.

It will be appreciated that the outer sheets of material are bonded to the inner core of the part, namely the mouldable padding. Similarly, as the attached fasteners are secured to only one of the outer sheets any stitching used to secure the fasteners is likewise encased by the adhesive and the padding and does not pass through the padded part as whole. This prevents the stitching unravelling should it become worn in use. Any other form of securement for the fasteners is likewise encased by the adhesive and the padding and thereby held in position within the moulded and bonded laminate. Also, any stitching required to secure the fasteners only needs to pass through one of the outer sheets which reduces the length of the drop stitch in comparison with the prior art, which makes the drop stitches used in the present invention tighter and therefore stronger.

Preferably also, the mouldable padding comprises a foamed material. Advantageously, the mouldable padding comprises a sheet of closed-cell foam.

Other preferred but non-essential features of the present invention are described in the dependent claims appended hereto.

The present invention will now be described by way of example with reference to the accompanying drawings, in which:-
Fig. 1 is a view of one side of a padded part for use as part of a load-bearing harness or belt;
Fig. 2 is a view of the other side of the padded part shown in Fig. 1;
Fig. 3 is a schematic cross-section along the line III-III in Fig. 1 but to an enlarged scale;

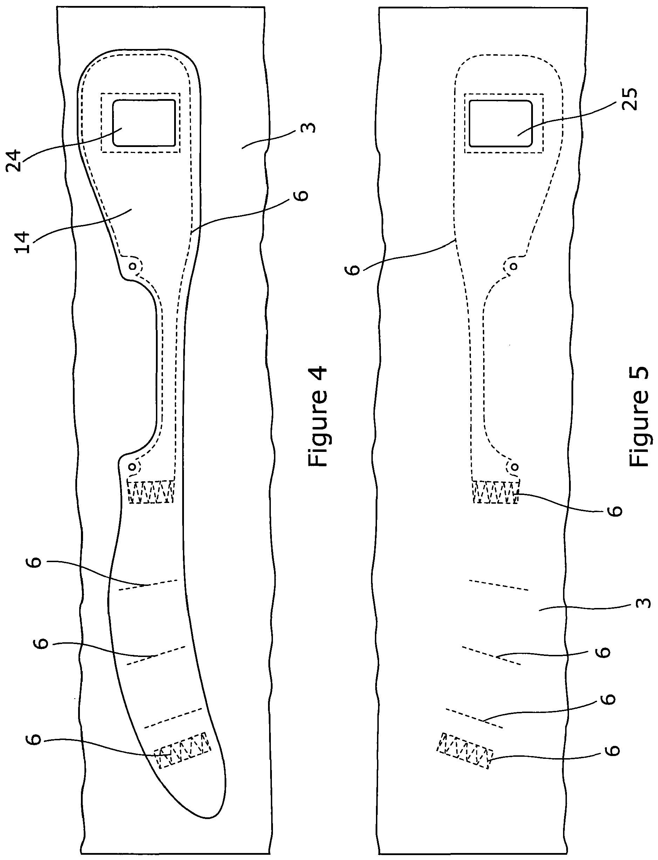

Fig. 4 is a view of one side of a first sheet of material to which a reinforcement and fasteners have been attached for use in the manufacture of the padded part shown in Figs. 1 to 3;
Fig. 5 is a view of the other side of the first sheet of material shown in Fig. 4;
Fig. 6 is a plan view of a jig when in an open condition for use in the production of the first sheet of material shown in Figs. 4 and 5;
Figs. 7A to 7C are schematic views showing use of the jig in a manufacturing sequence to produce the sheet of first material shown in Figs. 4 and 5;
Fig. 8 is a plan view of a lower part of a mould tool for use in the manufacture of a padded part as shown in Figs. 1 to 3;
Figs. 9A to 9D are schematic views showing a moulding and pressing part of a manufacturing sequence using the mould tool shown to produce the padded part shown in Figs. 1 to 3 from the sheet of first material shown in Figs. 4 and 5.

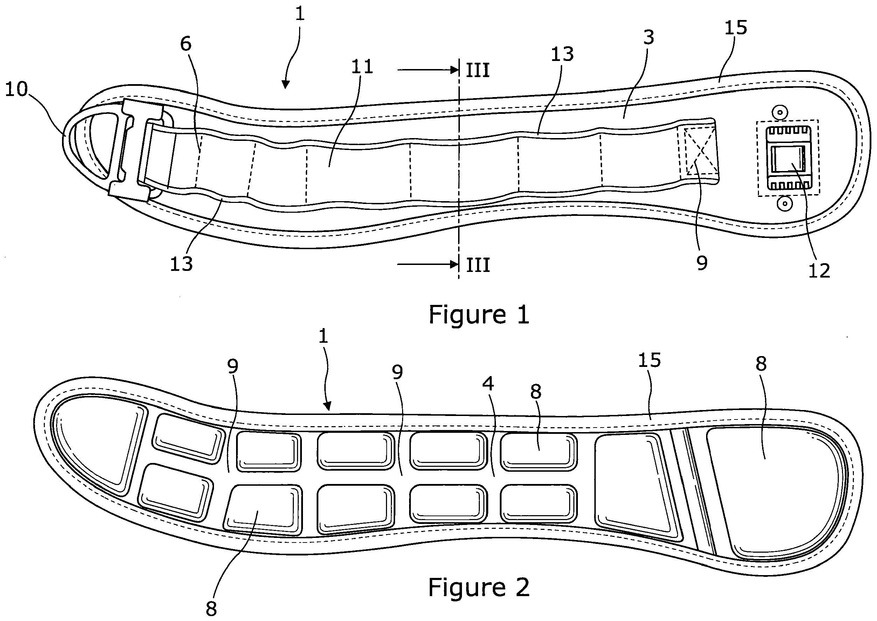

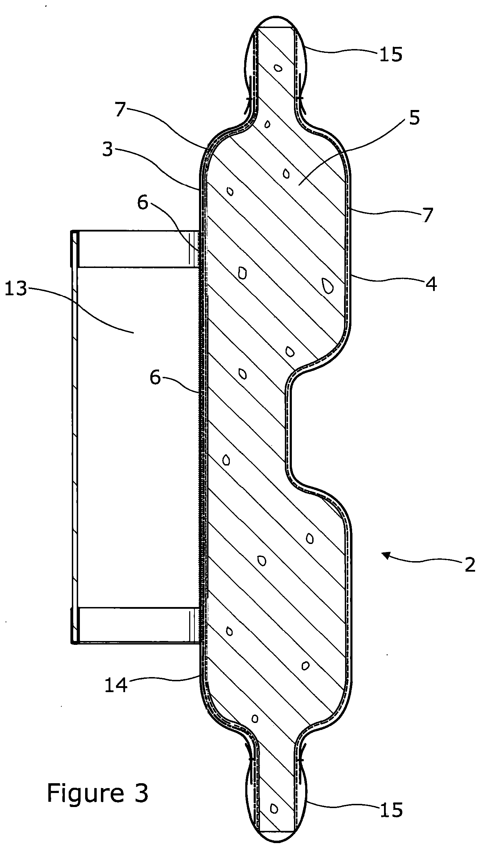

As shown in Figs. 1 and 2 a padded part 1 for use as part of a load-bearing harness or belt comprises a moulded and bonded laminate 2 of two outer sheets of flexible material 3, 4 enclosing a resilient padding 5. Stitching 6 is used to attach some components to the padded part 1 but layers of adhesive 7 between the outer sheets 3, 4 and the padding 5 bond the laminate together (see Fig 3). The part 1 is also moulded to provide upraised more thickly padded areas 8 and thinner areas 9 that allow the part 1 to flex and confirm to an underling shape, such as the curve of a shoulder or waist. One side of the part 1 comprising the outer sheet 3 is provided with one or more fasteners 10, 11 and 12 that are adapted to connect to other parts of the harness or belt or to pieces of equipment. The fasteners may comprise any suitable form of fastener. In the illustrated example, the fastener 10 is a metal loop to which other pieces of equipment may be clipped. It is secured to the outer sheet 3 by a webbing strap 11 that is also looped as at 13 to provide additional fasteners to which equipment may be clipped. Internally of the laminate, the webbing strap 11 is preferably secured to a reinforcement 14 through the sheet 3 as is described below. The reinforcement 14 strengthens the securement of the fasteners and may also provide stiffening, if necessary. The fastener 12 is one half of a clip, the other half of which is secured to another item to which the part 1 may be thereby connected. In other embodiments, the fasteners may comprise pop studs, rivets, clips, loops, washers and the like as appropriate. The padded part 1 is also provided with a binding 15 that is secured around the edges of the laminate 2, for example by stitching, to cover the raw edges of the laminate 2. The binding 15 is provided for the purposes of finishing the padded part 1 in an aesthetic manner but it may also provide an additional source of wear resistance and can be used to prevent flammable gases that may leach from the interior of the laminate from the padding, adhesive or reinforcement from escaping should the laminate become hot during use. In addition, the binding 15 may be made load-bearing if required.

In order to enable the laminate 2 to be moulded to provide the areas 8 and 9 of different thickness, the padding 5 preferably comprises a mouldable foamed material. Advantageously, a closed-cell foam is used as this will not absorb moisture. However, any suitable mouldable padding may be used dependent on the use to which the padded part 1 is intended to be put.

Similarly, the outer sheets of flexible material 3, 4 preferably comprise sheets of neoprene rubber, which are also impervious to moisture. However, again any suitable flexible material, such as plastics sheeting, woven fabrics and the like, may be used dependent on the use to which the padded part 1 is intended to be put.

The layers of adhesive 7 used to bond the sheets 3, 4 to the padding 5 preferably comprise a hot melt adhesive as this enables the laminate 2 to be simultaneously bonded and moulded. The layers of adhesive 7 may be provided as a coating on the surfaces of the mouldable padding 5 or supplied as sheets of film that are located between the padding 5 and the first and second sheets of flexible material 3, 4 prior to the bonding and moulding process as is described in more detail below.

The padded part 1 is manufactured from pre-assembled units that enable a consistent product to be produced. Preferably, a jig 16 and a mould tool 17 are provided that enable a plurality of conjoined parts to be produced at the same time. After the bonding and moulding process, a plurality of conjoined laminates 2 are produced in a panel which can then be separated and finished by application of the binding 15 to each. In the present illustrated example six laminates 2 are produced simultaneously. However, it will be appreciated that fewer or more such laminates 2 may be produced simultaneously and that it is possible to manufacture the laminates 2 and thereby each padded part 1 individually.

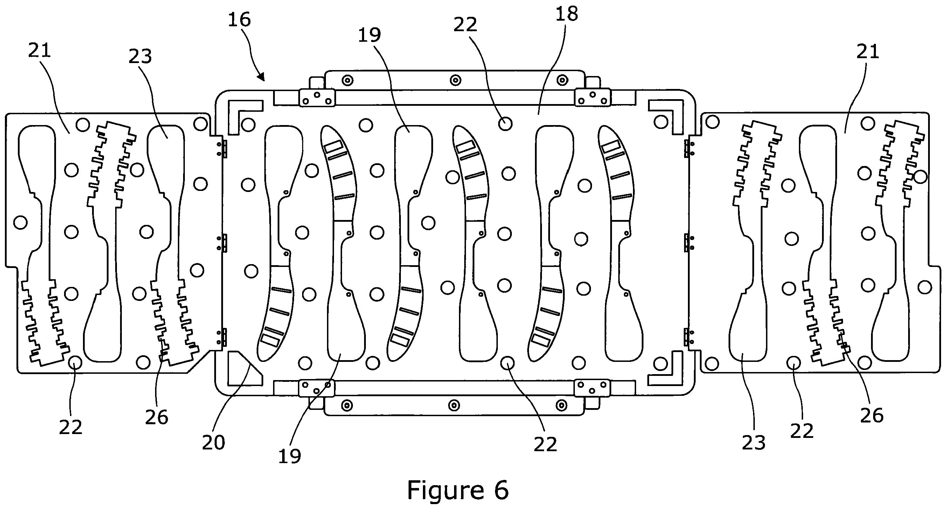

A first step in the manufacture of the padded part 1 is to attach the fasteners 10, 11, 12 to the outer sheet 3. This is accomplished using the jig 16 that enables the fasteners 10, 11 12 to be aligned correctly relative to the sheet 3. As shown in the Fig. 6, the jig 16 comprises a board 18 that is provided with a plurality of rebates 19 that each correspond to one of the padded parts 1 to be manufactured. Each rebate 19 is adapted to locate the reinforcement 14 and has a shape that corresponds to the profile of the reinforcement 14. The board 18 is also provided with corner marker 20 which is used to align the sheet 3 to the board as described below. Hinged to the sides of the board 18 are two stencil boards 21 that can be folded over the board 18 and held in the correct alignment thereto by magnets 22 that are inset into the boards 18 and 21. The stencil boards 21 have cut-outs 23 which conform to and align with the positions of the rebates 19 and are used as sewing guides.

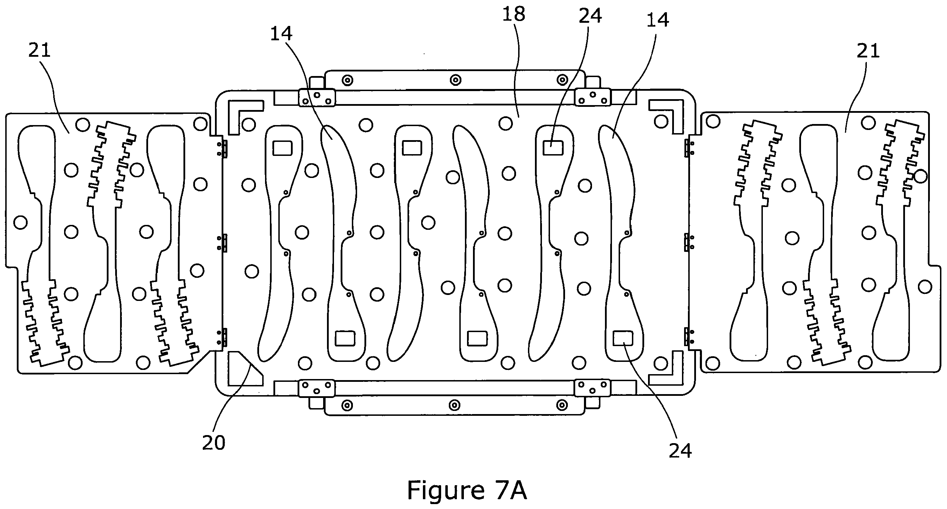

Referring to Figs. 7A to 7C, in use the reinforcements 14 are first inserted into the rebates 19 as shown in Fig. 7A. The shape of the reinforcements 14 will depend on the type and location of the fasteners to be attached to the sheet 3. In the present example, the reinforcement 14 runs along the length of the padded part 1 and is provided with a window 24 which corresponds to the location of the clip 12. The reinforcement 14 can be made of any suitable material but is preferably strong and flexible. One suitable material is a plastics-coated webbing that will not fray but which can be attached to the sheet 3 by stitching.

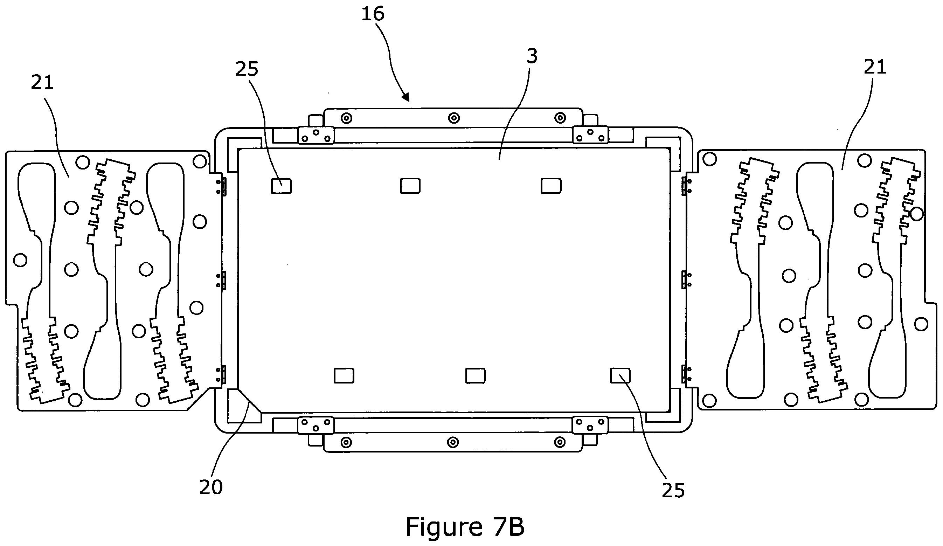

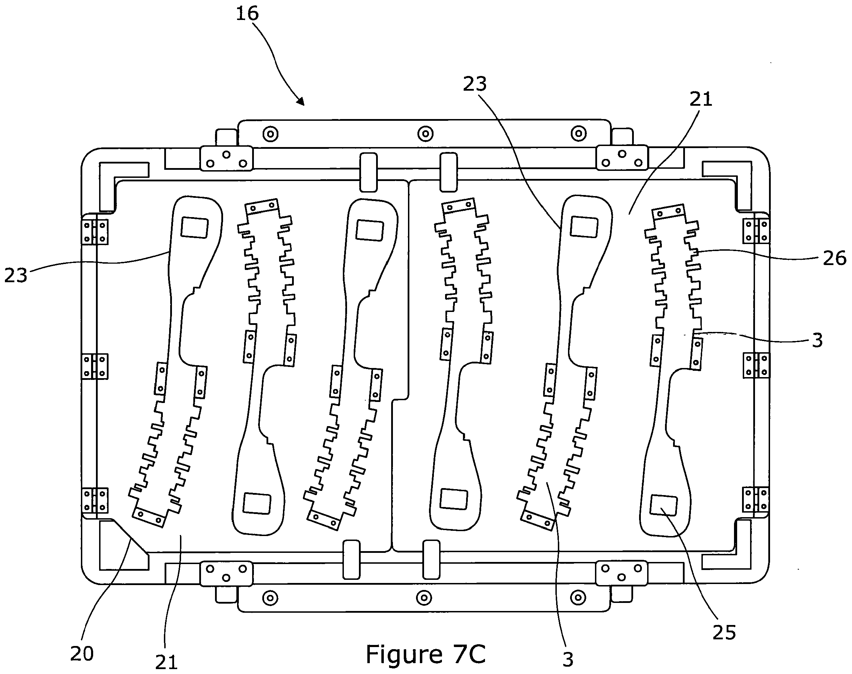

Separately, the sheet 3 is cut to size so that it will fit in the jig 16 and one corner is removed as a registration marker so that it will align with the corner marker 20. In addition, cut-outs 25 are made in the sheet 3 that will correspond with the positions of the windows 24 in the reinforcements 14 and the clips 12. Once prepared in this way, the sheet 3 is inserted in the jig 16 over the reinforcements 14, the cut-away corner being aligned with the maker 20, as shown in Fig. 7B. Blocks may also be used to align the cut-outs 25 with the windows 24 but are removed after such alignment. To assist with the correct alignment, the locations in the board 18 that correspond with the windows 24 and the cut-outs 25 may be provided with magnets so that the surface of these locations in the board is magnetic to assist in positioning of the blocks and thereby the correct positioning of the reinforcement 14 in the rebate and the sheet 3 relative to the reinforcement. Once the blocks have been removed, the stencil boards 21 are closed over the sheet 3, as shown in Fig. 7C, and the fasteners 10 and 11 are attached to the stencil boards 21 so that they lie above the cut-outs 23. The boards 21 are preferably provided with markers and spacers 26 for this purpose to hold the fasteners 10 and 11 in position relative to the underlying reinforcements 14 and the sheet 3. When the fasteners 10 and 11 have been correctly positioned, they are stitched to the sheet 3 and the reinforcement 14 using the cut-outs 23 as sewing guides. The stitching may be carried out using an automated sewing machine that is programmed to sew around the cut-outs 23 using their edges as guides.

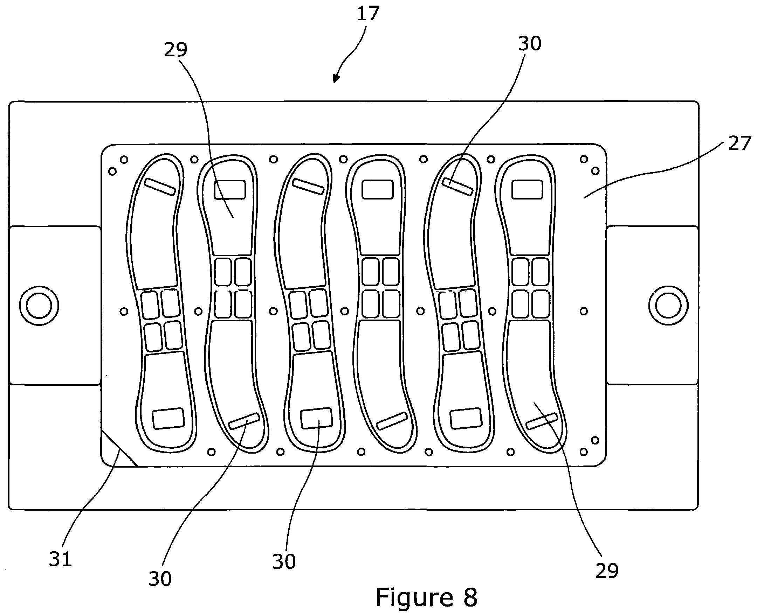

After the fasteners 10 and 11 have been sewn to the sheet 3 and the underlying reinforcements 14, the sheet 3 and its attached fasteners 10, 11 and reinforcements 14 is removed from the jig 16. The fasteners 12 are now fitted to the sheet 3 by location through the windows 24 and cut-outs 25 so that they protrude from the same side of the sheet 3 as the fasteners 10, 11. The fasteners 12 may be held in place by virtue of peripheral flanges or similar projections that abut the reinforcements 14. Alternatively, the fasteners 12 may be secured by an adhesive, rivers, screws or any other suitable fastener. The sheet 2 is then ready to proceed to the bonding and moulding part of the manufacturing process. This involves use of the mould tool 17, which is formed in two parts, a lower part 27, as shown in Fig. 8, and a complementary upper part 28 that is not shown in detail but is of similar overall shape to the lower part 27. The parts 27 and 28 comprise a plurality of mould surfaces 29 used to shape each padded part in a simultaneous moulding and pressing operation. In the present example, each mould part 27, 28 comprises six mould surfaces 29 so that the sheet 3 and the attached fasteners 10, 11 and reinforcements 14 which has been removed from the jig 16 can be inserted directly into it for the production of six padded parts 1. The sheet 3 is fitted into the lower part 27 of the tool 17 and the mould surfaces 29 here define cavities 30 formed below the mould surfaces 29 in which any metal or rigid fastener, here fasteners 10 and 12, attached to or to be attached to the sheet 3 are inserted whereby the fastener or fasteners are unaffected by pressure exerted by the mould tool 17 during the moulding and pressing part of the manufacturing process. Preferably, those cavities 30 are adapted to retain steel fasteners, such as the fasteners 10 and 12, by being provided with an underlying magnet so that the cavity 30 defines a magnetic surface that assists in location of the appropriate fastener within the cavity 30.

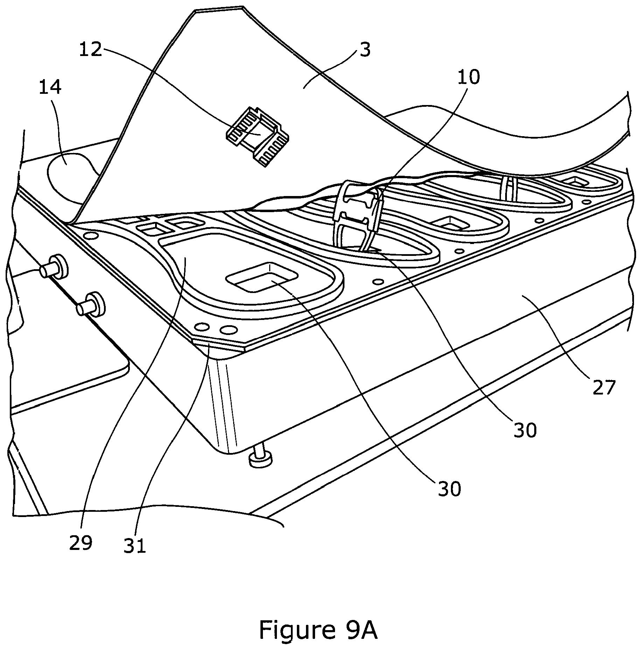

Referring now to Figs. 9A to 9D, in use the sheet 3 with the attached fasteners 10, 11, 12 and reinforcements 14 is located in the lower mould part 27 with the reinforcements 14 uppermost and the fasteners 10, 11, 12 located in the appropriate cavities 30, as shown in Fig. 9A. The sheet 3 is positioned in the mould part 27 using its removed corner as a registration marker that aligns with a complementary corner marker 31 provided at an appropriate corner of the mould part 27.

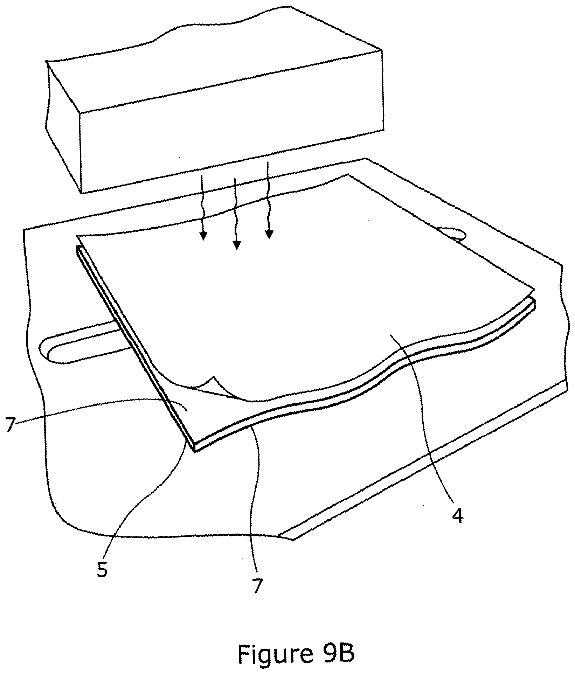

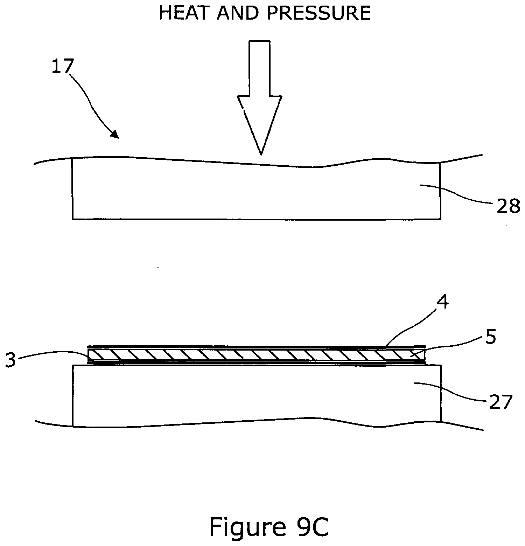

Apart from the mould tool 17, a layer of mouldable padding 5 is overlaid by the second sheet 4. In this example the mouldable padding 5 comprises a sheet of a closed cell foam that is of similar size to the sheets 3 and 4. Preferably, the outer surfaces of the foam have been provided with a layer of a hot-melt adhesive. Alternatively, two layers of such adhesive in the form of a film may be located above and below the sheet of padding 5. The sheet 4, the padding 5 and the adhesive layers are then preferably pre-heated for a short period sufficient to allow the padding 5 and adhesive layers to heat through to temperature of around 180°C, as shown in Fig. 9B. This typically takes several minutes. The padding 5 and adhesive layers are then located above the sheet 3 in the mould part 27. Hence, the mould part 27 holds a layered assembly comprising, in order, the first sheet of flexible material 3 with its attached fasteners 10, 11, 12 and reinforcements 14, a sheet of mouldable padding 5 and the second sheet of flexible material 4, hot melt adhesive layers 7 being provided between the padding 5 and the first and second sheets 3 and 4. This layered assembly is then covered by the upper mould part 28, as shown in Fig. 9C, and the mould tool 17 is closed in a press that simultaneously bonds and moulds the layered assembly by bonding the layers of the assembly together and by moulding the layered assembly into the predetermined shape of the mould surfaces 29. In the present example wherein the sheets 3 and 4 are made of neoprene rubber and the padding 5 comprises a closed-cell foam, the bonding and moulding may take place at a temperature of around 180°C for approximately 3 minutes. The mould tool 17 is shaped so that it bonds the sheets 3 and 4 together around the padding 5 for each part 1 by forming a moulded pocket in which the foam is located. Air pockets, other than in the foam, are thereby prevented from being trapped within these pockets and the pockets are sealed against the ingress of moisture.

It will be appreciated that in the method described above the layered assembly is preheated and then cold pressed, i.e. in a press with a mould tool and platens that are not heated. However, in an alternative method, the bonding and moulding of the layered assembly may take place in a press with heated platens so that preheating of the layered assembly is not required, the layered assembly being heated by the heated mould tool. In another method, the layered assembly is preheated and then bonded and moulded in a press that is also heated.

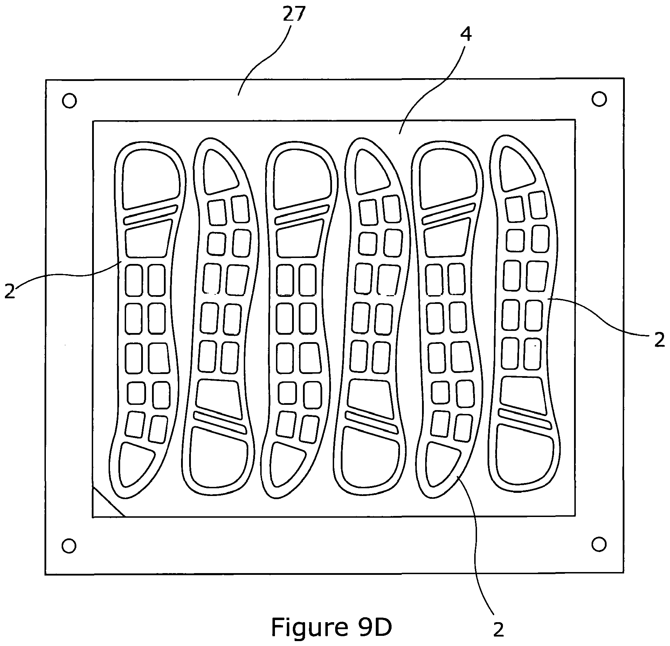

After moulding, the mould tool 17 is opened leaving the conjoined laminates 2 in the lower mould part 27, as shown in Fig. 9D. These laminate 2 can then be removed and separated from one another by cutting around their outline. Each laminate 2 may then be finished by the addition of the binding 15, which is preferably stitched around the raw edges of the laminate 2 to provide the finished padded part 1 as shown in Figs. 1 and 2.

It will be appreciated that the method described above provides consistently manufactured padded parts 1 wherein the stitching securing the fasteners 10, 11 thereto appears only on the external side of the part 1 and not on the side that will be adjacent the body or clothing. This protects the stitching from wear. Also, as the stitching and other means, for example any peripheral flanges or similar projections, that retain the fasteners are encased by the padding within the part 1, the stitching is prevented from unravelling should any external part of it become damaged in use.

## Claims

1. A method of manufacturing a padded part (1) primarily for use in an item of wear comprising the steps of
providing a first sheet (3) of a flexible material;
locating at least one fastener (10, 11, 12) on one side of the first sheet (3);
providing a second sheet (4) of flexible material;
creating a layered assembly in a mould tool (17), the layered assembly comprising, in order, the first sheet (3) of material such that said one side of the first sheet (3) is outermost, a piece of mouldable padding (5), and the second sheet (4) of flexible material, hot melt adhesive layers (7) being provided between the padding (5) and the first and second sheets (3, 4) of flexible material; and
moulding the layered assembly in a press after or during heating of the layered assembly to bond the layers of the assembly together and simultaneously to mould the layered assembly into a predetermined shape thereby forming a moulded and pressed laminate (2) ; wherein the mould tool (17) is provided with at least one cavity (30) in which said fastener or fasteners (10, 11, 12) located on said one side of the first sheet (3) are inserted whereby the fastener or fasteners (10, 11, 12) are unaffected by the pressure exerted by the press.

2. A method as claimed in Claim 1, **characterised in that** said at least one fastener (10) is either secured to said one side of the first sheet (3) prior to creation of the layered assembly and/or another fastener is secured to the first sheet of material when the layered assembly is moulded in the press.

3. A method as claimed in Claim 1 or Claim 2, **characterised in that** the cavity (30) is at least partially defined by a magnetic surface that assists in location of the fastener (10,12) within the cavity (30).

4. A method as claimed in any of Claims 1 to 3, **characterised in that** the first sheet (3) of material is provided with at least one registration marker that enables the first sheet of material (3) to be located in the mould tool (17) in a predetermined orientation and position.

5. A method as claimed in Claims 1 to 4, **characterised in that** the layered assembly is either preheated prior to moulding in a press that is not heated or is moulded in a heated press.

6. A method as claimed in any of Claims 1 to 5, **characterised in that** the fastener or fasteners (10, 11, 12) are attached to the first sheet (3) of material using a jig (16) that facilitates their alignment relative to the first sheet of material (3).

7. A method as claimed in any of Claims 1 to 6, **characterised in that** a reinforcement (14) is provided on the other side of the first sheet (3) of flexible material opposite said one side of said first sheet (3) of flexible material.

8. A method as claimed in Claim 7, **characterised in that** said at least one fastener (10, 11, 12) is simultaneously attached to both the first sheet (3) of material and to the reinforcement (14).

9. A method as claimed in Claim 8 when dependent on Claim 6, **characterised in that** said at least one fastener (10, 11) is simultaneously attached to both the first sheet (3) of material and to the reinforcement (14) by stitching using the jig (16) prior to creation of the layered assembly.

10. A method as claimed in Claim 9, **characterised in that** the jig (16) is provided with a rebate (19) into which the reinforcement (14) is located.

11. A method as claimed in Claim 10, **characterised in that** a surface of the jig (16) defining at least a part of the rebate (19) is magnetic to assist in the positioning of one or more fasteners (10, 12) relative to the reinforcement (14).

12. A method as claimed in any of Claims 9 to 11 when dependent on Claim 4, **characterised in that** the first sheet (3) of material is provided with one or more registration markers that enable it to be located in the jig (14) in a predetermined orientation and position, which registration marker or markers may be the same as that or those used to locate the first sheet (3) of flexible material in the mould tool (17).

13. A method as claimed in any of Claims 1 to 12, **characterised in that** the mouldable padding (5) comprises a foamed material or a sheet of closed-cell foam and the first and second sheets (3, 4) of flexible material comprise sheets of neoprene rubber.

14. A method as claimed in any of Claims 1 to 13, **characterised in that** the hot melt adhesive layers (7) are provided either as a coating on the surfaces of the mouldable padding (5) or in the form of sheets of film that are located between the padding (5) and the first and second sheets (3, 4) of flexible material in the layered assembly.

15. A method as claimed in any of Claims 1 to 14, **characterised in that** the padded part (1) is provided with a binding (15) that is secured around the edges of the moulded and pressed laminate (2).

## Patentansprüche

1. Verfahren zur Herstellung eines gepolsterten Teils (1) vornehmlich für die Verwendung in einem Kleidungsstück, das die folgenden Schritte beinhaltet:
Bereitstellen eines Bogens (3) aus einem flexiblen Material;
Platzieren wenigstens eines Befestigungsmittels (10, 11, 12) auf einer Seite des ersten Bogens (3);
Bereitstellen eines zweiten Bogens (4) aus flexiblem Material;
Erzeugen einer geschichteten Baugruppe in einem Formwerkzeug (17), wobei die geschichtete Baugruppe der Reihe nach den ersten Materialbogen (3), so dass die genannte eine Seite des ersten Bogens (3) ganz außen liegt, ein Stück formbare Polsterung (5) und den zweiten Bogen (4) aus flexiblem Material umfasst, wobei Schmelzkleberschichten (7) zwischen der Polsterung (5) sowie dem ersten und zweiten Bogen (3, 4) aus flexiblem Material bereitgestellt werden; und
Formen der geschichteten Baugruppe in einer Presse nach oder während dem Erhitzen der geschichteten Baugruppe zum Verkleben der Schichten der Baugruppe miteinander und zum gleichzeitigen Formen der geschichteten Baugruppe zu einer vorbestimmten Gestalt, um dadurch ein geformtes und gepresstes Laminat (2) zu bilden; wobei
das Formwerkzeug (17) mit wenigstens einem Hohlraum (30) versehen ist, in den das oder die auf der genannten einen Seite des ersten Bogens (3) befindliche(n) Befestigungsmittel (10, 11, 12) eingeführt wird/werden, so dass das oder die Befestigungsmittel (10, 11, 12) durch den von der Presse ausgeübten Druck unbeeinflusst bleibt/bleiben.

2. Verfahren nach Anspruch 1, **dadurch gekennzeichnet, dass** das genannte wenigstens eine Befestigungsmittel (10) entweder auf der genannten einen Seite des ersten Bogens (3) vor dem Erzeugen der geschichteten Baugruppe befestigt wird und/oder ein anderes Befestigungsmittel an dem ersten Materialbogen befestigt wird, wenn die geschichtete Baugruppe in der Presse geformt wird.

3. Verfahren nach Anspruch 1 oder Anspruch 2, **dadurch gekennzeichnet, dass** der Hohlraum (30) wenigstens teilweise durch eine magnetische Oberfläche definiert wird, die beim Platzieren des Befestigungsmittels (10, 12) im Hohlraum (30) hilft.

4. Verfahren nach einem der Ansprüche 1 bis 3, **dadurch gekennzeichnet, dass** der erste Materialbogen (3) mit wenigstens einer Registrierungsmarkierung versehen ist, die eine Platzierung des ersten Materialbogens (3) im Formwerkzeug (17) in einer vorbestimmten Orientierung und Position ermöglicht.

5. Verfahren nach den Ansprüchen 1 bis 4, **dadurch gekennzeichnet, dass** die geschichtete Baugruppe entweder vor dem Formen in einer Presse vorerhitzt wird, die nicht erhitzt ist, oder in einer erhitzten Presse geformt wird.

6. Verfahren nach einem der Ansprüche 1 bis 5, **dadurch gekennzeichnet, dass** das/die Befestigungsmittel (10, 11, 12) am ersten Materialbogen (3) mit einer Haltevorrichtung (16) angebracht wird/werden, die deren Ausrichtung relativ zum ersten Materialbogen (3) erleichtert.

7. Verfahren nach einem der Ansprüche 1 bis 6, **dadurch gekennzeichnet, dass** eine Verstärkung (14) auf der anderen Seite des ersten Bogens (3) aus flexiblem Material gegenüber der genannten einen Seite des genannten Bogens (3) aus flexiblem Material vorgesehen wird.

8. Verfahren nach Anspruch 7, **dadurch gekennzeichnet, dass** das genannte wenigstens eine Befestigungsmittel (10, 11, 12) gleichzeitig am ersten Materialbogen (3) und an der Verstärkung (14) angebracht wird.

9. Verfahren nach Anspruch 8 in Abhängigkeit von Anspruch 6, **dadurch gekennzeichnet, dass** das genannte eine Befestigungsmittel (10, ii) gleichzeitig sowohl am ersten Materialbogen (3) als auch an der Verstärkung (14) durch Nähen mit der Haltevorrichtung (16) vor dem Erzeugen der geschichteten Baugruppe angebracht wird.

10. Verfahren nach Anspruch 9, **dadurch gekennzeichnet, dass** die Haltevorrichtung (16) mit einer Aussparung (19) versehen ist, in der die Verstärkung (14) platziert wird.

11. Verfahren nach Anspruch 10, **dadurch gekennzeichnet, dass** eine Oberfläche der Haltevorrichtung (16), die wenigstens einen Teil der Aussparung (19) definiert, magnetisch ist, um beim Positionieren von einem oder mehreren Befestigungsmitteln (10, 12) relativ zu der Verstärkung (14) zu helfen.

12. Verfahren nach einem der Ansprüche 9 bis 11 in Abhängigkeit von Anspruch 4, **dadurch gekennzeichnet, dass** der erste Materialbogen (3) mit einer oder mehreren Registrierungsmarkierungen versehen ist, die seine Platzierung in der Haltevorrichtung (14) in einer vorbestimmten Orientierung und Position ermöglichen, wobei die Registrierungsmarkierung(en) dieselbe(n) ist/sind wie die, die zum Platzieren des ersten Bogens (3) von flexiblem Material im Formwerkzeug (17) benutzt werden.

13. Verfahren nach einem der Ansprüche 1 bis 12, **dadurch gekennzeichnet, dass** die formbare Polsterung (5) ein geschäumtes Material oder einen Bogen aus geschlossenzelligem Schaumstoff umfasst und der erste und zweite Bogen (3, 4) aus flexiblem Material Bögen aus Neoprengummi umfassen.

14. Verfahren nach einem der Ansprüche 1 bis 13, **dadurch gekennzeichnet, dass** die Heißkleberschichten (7) entweder als Beschichtung auf den Oberflächen der formbaren Polsterung (5) oder in Form von Folienbögen vorgesehen werden, die sich zwischen der Polsterung (5) und dem ersten und zweiten Bogen (3, 4) aus flexiblem Material in der geschichteten Baugruppe befinden.

15. Verfahren nach einem der Ansprüche 1 bis 14, **dadurch gekennzeichnet, dass** der gepolsterte Teil mit einer Bindung (15) versehen ist, die um die Ränder des geformten und gepressten Laminats (2) herum befestigt werden.

## Revendications

1. Procédé de fabrication d'une partie rembourrée (1) principalement destinée à une utilisation dans un article d'habillement, comprenant les étapes consistant à :
mettre à disposition une première feuille (3) d'un matériau souple ;
localiser au moins un dispositif de fixation (10, 11, 12) sur un côté de la première feuille (3) ;
mettre à disposition une deuxième feuille (4) de matériau souple ;
créer un assemblage à couches dans un outil de moulage (17), l'assemblage à couches comprenant, en ordre, la première feuille (3) de matériau de telle sorte que ledit un côté de la première feuille (3) soit situé le plus à l'extérieur, une pièce de rembourrage moulable (5), et la deuxième feuille (4) de matériau souple, des couches d'adhésif thermofusible (7) étant prévues entre le rembourrage (5) et les première et deuxième feuilles (3, 4) de matériau souple ; et
mouler l'assemblage à couches dans une presse après ou durant le chauffage de l'assemblage à couches afin de liaisonner les couches de l'assemblage ensemble et simultanément de mouler l'assemblage à couches en une forme prédéterminée formant par conséquent un stratifié moulé et pressé (2) ; dans lequel
l'outil de moulage (17) est pourvu d'au moins une cavité (30) dans laquelle ledit dispositif ou lesdits dispositifs de fixation (10, 11, 12) localisé(s) sur ledit un côté de la première feuille (3) est/sont inséré(s), par conséquent le dispositif de fixation ou les dispositifs de fixation (10, 11, 12) n'est pas/ne sont pas affecté(s) par la pression exercée par la presse.

2. Procédé selon la Revendication 1, **caractérisé en ce que** ledit au moins un dispositif de fixation (10) est soit assujetti audit un côté de la première feuille (3) préalablement à la création de l'assemblage à couches et/soit un autre dispositif de fixation est assujetti à la première feuille de matériau lorsque l'assemblage à couches est moulé dans la presse.

3. Procédé selon la Revendication 1 ou la Revendication 2, **caractérisé en ce que** la cavité (30) est au moins partiellement définie par une surface magnétique qui assiste à la localisation du dispositif de fixation (10, 12) au sein de la cavité (30).

4. Procédé selon l'une quelconque des Revendications 1 à 3, **caractérisé en ce que** la première feuille (3) de matériau est pourvue d'au moins un marqueur de repérage qui permet à la première feuille de matériau (3) d'être localisée dans l'outil de moulage (17) suivant une orientation et une position prédéterminées.

5. Procédé selon les Revendications 1 à 4, **caractérisé en ce que** l'assemblage à couches est soit préchauffé préalablement au moulage dans une presse qui n'est pas chauffée soit est moulé dans une presse chauffée.

6. Procédé selon l'une quelconque des Revendications 1 à 5, **caractérisé en ce que** le dispositif de fixation ou les dispositifs de fixation (10, 11, 12) est/sont attaché(s) à la première feuille (3) de matériau en utilisant un gabarit de montage (16) qui facilite leur alignement relativement à la première feuille de matériau (3).

7. Procédé selon l'une quelconque des Revendications 1 à 6, **caractérisé en ce qu'**un renforcement (14) est prévu sur l'autre côté de la première feuille (3) de matériau souple à l'opposé dudit un côté de ladite première feuille (3) de matériau souple.

8. Procédé selon la Revendication 7, **caractérisé en ce que** ledit au moins un dispositif de fixation (10, 11, 12) est attaché simultanément à la fois à la première feuille (3) de matériau et au renforcement (14).

9. Procédé selon la Revendication 8 lorsqu'elle est dépendante de la revendication 6, **caractérisé en ce que** ledit au moins un dispositif de fixation (10, 11) est attaché simultanément à la fois à la première feuille (3) de matériau et au renforcement (14) par piquage en utilisant le gabarit de montage (16) préalablement à la création de l'assemblage à couches.

10. Procédé selon la Revendication 9, **caractérisé en ce que** le gabarit de montage (16) est pourvu d'une feuillure (19) dans laquelle le renforcement (14) est localisé.

11. Procédé selon la Revendication 10, **caractérisé en ce qu'**une surface du gabarit de montage (16) définissant au moins une partie de la feuillure (19) est magnétique afin d'assister au positionnement d'un ou de plusieurs dispositifs de fixation (10, 12) relativement au renforcement (14).

12. Procédé selon l'une quelconque des Revendications 9 à 11 lorsqu'elle est dépendante de la revendication 4, **caractérisé en ce que** la première feuille (3) de matériau est pourvue d'un ou plusieurs marqueurs de repérage qui lui permettent d'être localisée dans le gabarit de montage (14) suivant une orientation et une position prédéterminées, ce ou ces marqueurs de repérage pouvant être le(s) même(s) que celui ou ceux utilisé(s) pour localiser la première feuille (3) de matériau souple dans l'outil de moulage (17).

13. Procédé selon l'une quelconque des Revendications 1 à 12, **caractérisé en ce que** le rembourrage moulable (5) comprend un matériau alvéolaire ou une feuille de mousse à cellules fermées et les première et deuxième feuilles (3, 4) de matériau souple comprennent des feuilles de caoutchouc néoprène.

14. Procédé selon l'une quelconque des Revendications 1 à 13, **caractérisé en ce que** les couches d'adhésif thermofusible (7) sont prévues soit en tant que revêtement sur les surfaces du rembourrage moulable (5) soit sous la forme de feuilles de pellicule qui sont localisées entre le rembourrage (5) et les première et deuxième feuilles (3, 4) de matériau souple dans l'assemblage à couches.

15. Procédé selon l'une quelconque des Revendications 1 to 14, **caractérisé en ce que** la partie rembourrée (1) est munie d'un liage (15) qui est assujetti autour des bords du stratifié moulé et pressé (2).
